# EUROPEAN PATENT APPLICATION

(11) **EP 3 933 721 A1**
(43) Date of publication of application: **05.01.2022**
(21) Application number: 21183336.3
(22) Date of filing: 02.07.2021
(51) Int. Cl.: G06Q 10/00, G06Q 10/06

(54) **SYSTEM AND METHOD FOR UPDATING REAL-TIME PROJECT STATUS BASED ON DELIVERABLE STATUS**

(30) Priority: 02.07.2020 US 202063047772 P
(71) Applicant: DASSAULT SYSTEMES AMERICAS CORP., Waltham, MA 02451 (US)
(72) Inventor: PRASAD, Ajay, Auburn Hills (US); RUCCIO, William J., Shelton (US); Mukesh Kumar, Singh, Bengaluru (IN)
(74) Representative: Bandpay & Greuter

(57) **Abstract**

An application updates a status of a project with a plurality of tasks, where each task has at least one deliverable. The project status is updated in real-time based on a deliverable status of at least one task deliverable. For each project task with at least one deliverable, a plurality of deliverable lifecycle states to be tracked are defined. Each tracked deliverable lifecycle state is mapped to a percentage completion of a project task. A weightage is assigned to each deliverable according to an importance of the deliverable. A changed lifecycle state is received for a deliverable, and the project task percentage completion status is automatically adjusted according to a product of the changed lifecycle state and the assigned weightage.

## Description

### CROSS-REFERENCE TO RELATED APPLICATION(S)

This application claims the benefit of priority to U.S. Provisional Patent Application No. 63/047,772, entitled *Method for Updating Real-Time Project Status Based on Deliverable Status,* which was filed on July 2, 2020. The disclosure of the prior application is incorporated by reference herein in its entirety.

### FIELD OF THE INVENTION

The present invention relates to project management tools, and more particularly, is related to automatically incorporating a deliverable status update into a project status update.

### BACKGROUND OF THE INVENTION

In project management, a project is typically managed by breaking the project down into a number of tasks, where the completion of each task is monitored by manually updating task parameters, for example a task percentage completion and/or a task maturity state. As product development and production become both more automated and distributed, complex task cross-dependencies become difficult to manage, complicating scheduling and allocation of resources. This results in additional non-value adding activities such as providing project status during landscape shifts. In particular, when the status of a first task deliverable changes, it can be difficult and time consuming to track and accurately reflect resulting impacts in a direct and/or indirect second deliverable. Furthermore, a manually prepared project status may be based solely on process data which may not be up-to date, so the resulting status may be more perception-based than fact-based. Therefore, there is a need in the industry to address one or more of these issues.

### SUMMARY OF THE INVENTION

Embodiments of the present invention provide a system and method for updating real-time project status based on deliverable status. Briefly described, the present invention is directed to an application that updates a status of a project with a plurality of tasks, where each task has at least one deliverable. The project status is updated in real-time based on a deliverable status of at least one task deliverable. For each project task with at least one deliverable, a plurality of deliverable lifecycle states to be tracked are defined. Each tracked deliverable lifecycle state is mapped to a percentage completion of a project task. A weightage is assigned to each deliverable according to an importance of the deliverable. A changed lifecycle state is received for a deliverable, and the project task percentage completion status is automatically adjusted according to a product of the changed lifecycle state and the assigned weightage.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principals of the invention.
FIG. 1 is a block diagram 100 showing the structure of a project under an exemplary first embodiment of the present invention.
FIG. 2 is a block diagram 200 showing the relationships between objects of the project of FIG. 1.
FIG. 3 is a screenshot of an exemplary task deliverables table under the first embodiment.
FIG. 4 is a screenshot showing editable deliverable weightage under the first embodiment.
FIG. 5 is a schematic diagram illustrating an example of a system for executing functionality of the present invention.
FIG. 6 is a flowchart of an exemplary method for automatically updating a project status according to the first embodiment.
FIG. 7 is a schematic block diagram of an exemplary embodiment for a system for automatically updating a project status.

### DETAILED DESCRIPTION

The following definitions are useful for interpreting terms applied to features of the embodiments disclosed herein, and are meant only to define elements within the disclosure.

As used within this disclosure, a "project" refers to a series of tasks to be completed in order to reach a specific outcome. A project may be defined as a set of inputs and outputs required to achieve a particular goal. Projects can range from simple to complex and can be managed by one person or by many persons. Projects are typically described and delegated by a project manager.

As used within this disclosure, a "task" refers to a single unit of work, for example, an action to accomplish in a project, a single step in a multi-step project. A task is accomplished by a set deadline, and contributes toward work-related objectives. Just as project management is the coordination of individual tasks, a task can be broken down further into subtasks, each of which may also have clear start and end dates for completion.

As used within this disclosure, a "deliverable" refers to a product or service provided to an internal or external client as part of a task. A deliverable usually has a due date and is tangible, measurable, and specific. A deliverable satisfies a milestone or due date that is created and produced in the project plan. Examples of a deliverable include a software product, a design document, a training program, a 3D Design, a requirement specification, an engineering or manufacturing artifact, or another asset according to the project plan.

As used within this disclosure, a "state" refers to a unit of progress to measure completion of a deliverable. Each state may be assigned a credit defining a "maturity level" for the deliverable which indicates a percentage of completion for the associated deliverable. For example, after a first state is completed, the deliverable may be credited as being 25% complete. Credit may be assigned to a state, for example, by the project manager.

As used within this disclosure, a "terminal" refers to a data entry device used to enter project data and process data for use by embodiments described herein. Examples of a terminal include a personal computer, a networked computer, a smart phone, and a tablet computer, among others. A terminal may communicate with one or more system entities directly or via one or more servers.

Reference will now be made in detail to embodiments of the present invention, examples of which are illustrated in the accompanying drawings. Wherever possible, the same reference numbers are used in the drawings and the description to refer to the same or like parts.

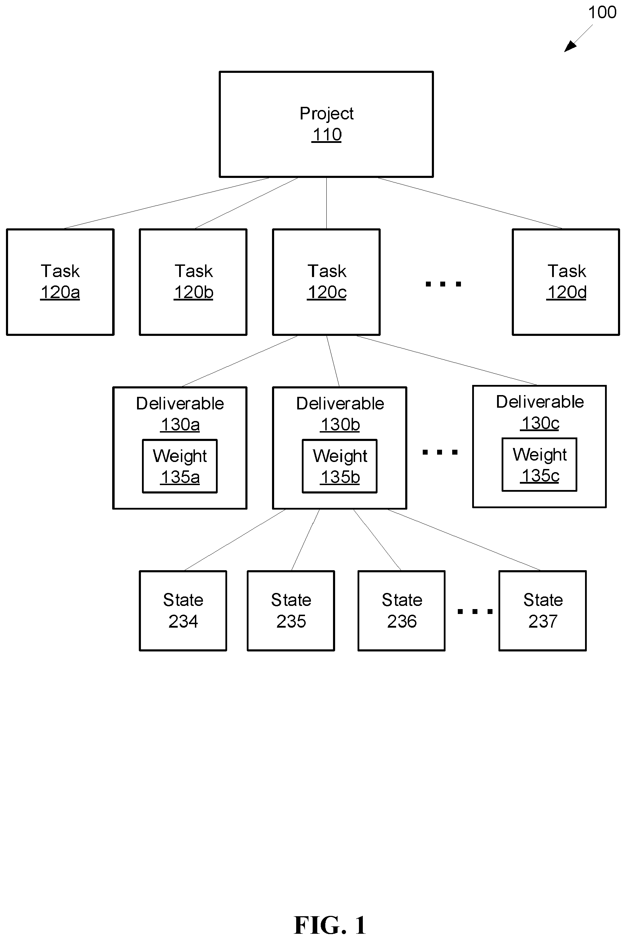

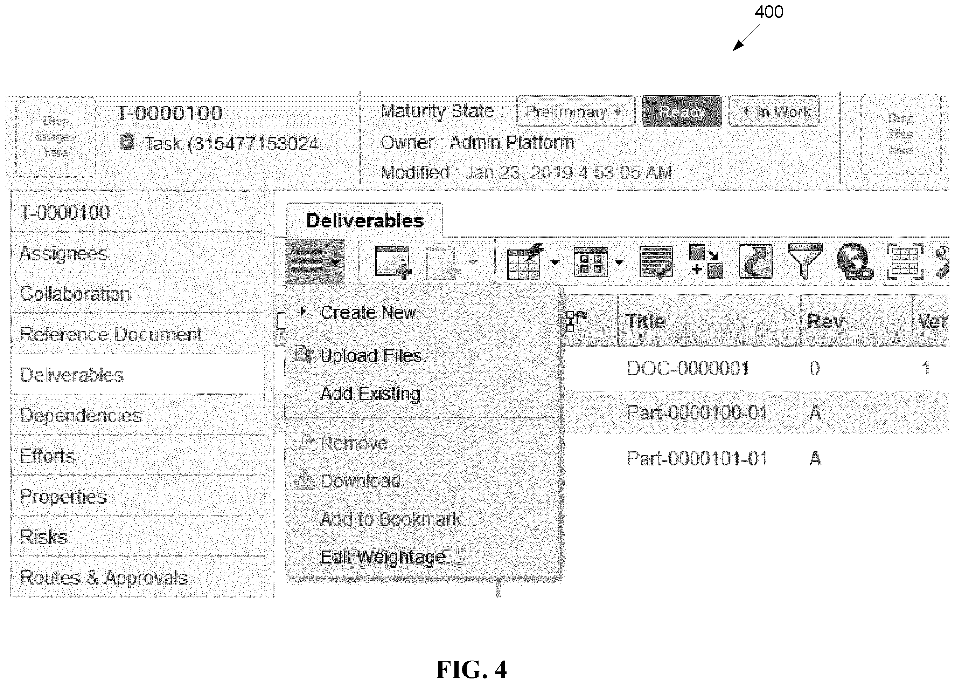

FIG. 1 is a block diagram 100 showing the structure of a project under an exemplary first embodiment of the present invention. A project 110 is made up of one or more tasks 120a-120d. Each task includes one or more deliverables 130a-130c. Each deliverable 130a-130c is assigned a weight (weightage) 135a-135c, for example by the project manager, indicating the relative importance of the associated task 120 to the project 110, as shown by FIG. 4. The minimum weight is 1%. The sum of each of the weights 135a-135c for all of the deliverables 130a-130c of a task 120a-120d is 100%. The maturity of each deliverable 130a-c is measured by a series of maturity states 234-237.

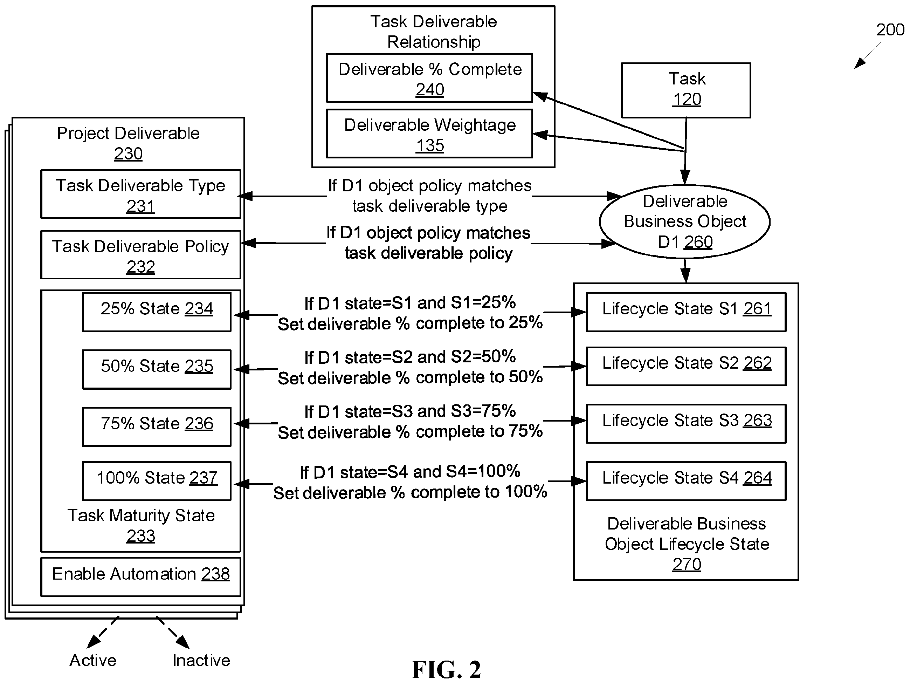

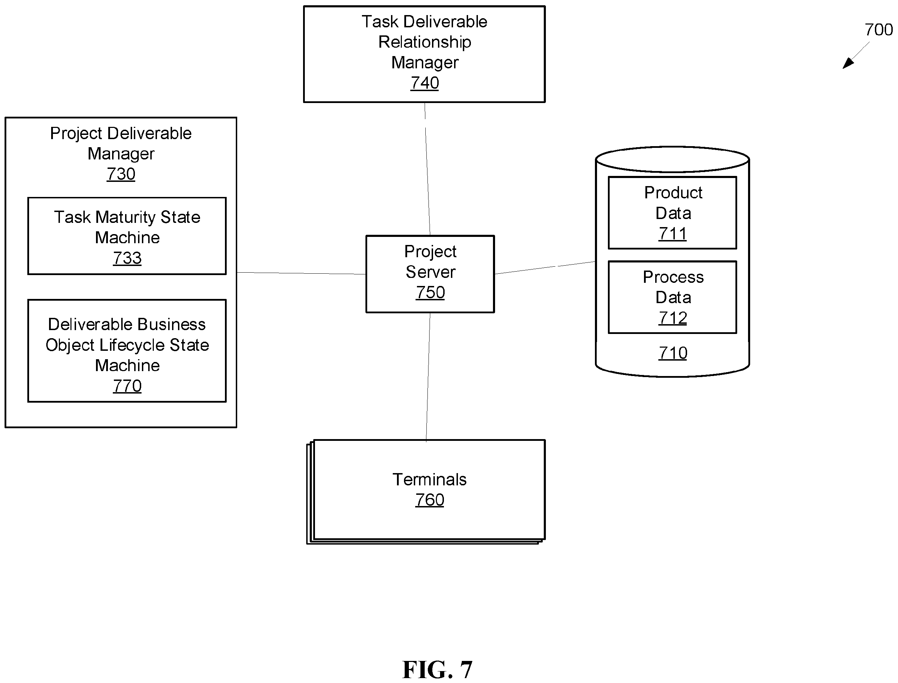

Every project task has one or more tangible deliverables. Under the first embodiment, product data 711 (FIG. 7) and process data 712 (FIG. 7) may be stored in a single database, allowing for interaction between related objects. For example, the project 110 may have an associated project database 710 (FIG. 7) containing objects and relationships between the objects. Examples of objects include a deliverable business object 260, a global project deliverables object 230 (FIG. 2), a page object providing input/output access to at least one other object, for example, the project deliverables object 230, a document object, a part object, and an automation object. The project deliverables object 230 stores the task deliverable type 231 (FIG. 2). Each deliverable 130a-c is represented by an associated global project deliverable object 230 (FIG. 2). The storage of product data 711 (FIG. 7) and process data 712 (FIG. 7) in one database 710 (FIG. 7) facilitates moving from manually created perception-based reporting of completion level to a more fact-based, automatic, and up-to-date reporting.

Previously, a task percentage completion value was updated based on a human task assignee manually updating the percentage completion of the task and also manually updating the task maturity state, for example, in a task lifecycle state. This was problematic as the task lifecycle state value was subjective, and in some cases resulted in inconsistent across different tasks in the project and/or across similar tasks for different projects.

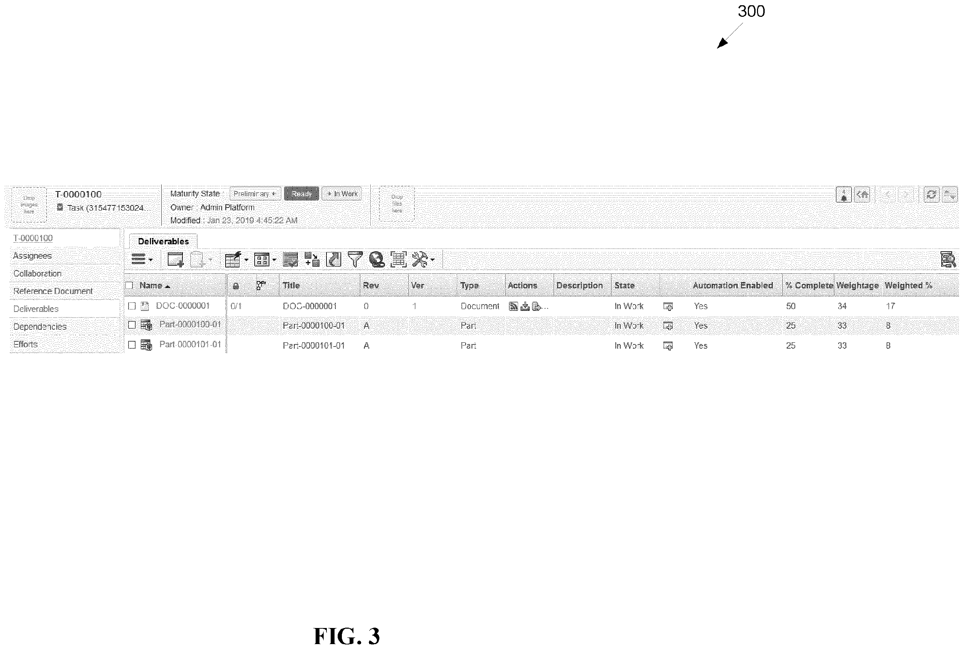

Under the first embodiment, a new object, the global deliverables object 230 (FIG. 2), is created to track the deliverable percentage completion. The global deliverables object 230 (FIG. 2) defines the task deliverable type 231 and an associated deliverable maturity state 234-237 (FIG. 2). Each task deliverable type has a template. Examples of a deliverable type 231 include a document, a PDF file, and an engineering design, among others. The deliverable maturity state 234-237 indicates a measure of completion for the deliverable, corresponding to, for example, 25%, 50%, 75% and 100%. The project percentage completion is calculated based on each deliverable maturity state 234-237 (FIG. 2). The deliverable task status may be displayed, for example, in a completion in an editable task deliverable table, as shown by FIG. 3.

FIG.2 shows a block diagram relating the task lifestyle state of a task 120 of a deliverable business object D1 260 with the maturity state of an associated deliverable 130 (FIG. 1) as represented by a global deliverable object 230. Examples of a deliverable business object D1 260 include, but are not limited to a Word document, a PDF file, an engineering design, a manufacturing plan, or a requirements specification. State name drop downs in a task deliverables table 300 (FIG. 3) correspond to 100%, 75%, 50%, 25% follow lifecycle state 261-264 in policy governing the type of deliverable. For example, "In Work" cannot be made 100% and "Released" cannot be made 75%. However, "Released" can be made 100% and "In Work" can be 75%.

Each task 120 has one or more deliverable 130 (FIG. 1) represented by the associated project deliverable object 230. Each project deliverable object 230 has a deliverable type 231, a task deliverable policy 232, for example "document release", a task maturity state 233 with a set of task deliverable maturity states 234-237, and an enable automation flag 238. If the enable automation flag 238 is set, the task 120 contributes a portion of the project deliverable percentage calculated by multiplying the task deliverable percentage complete 240 with the deliverable weightage 135.

The deliverable business object D1 260 includes a deliverable business object lifecycle state 270, which may be one of lifecycle maturity states S1-S4 261-264. If the deliverable business object lifecycle state 270 is S1261 and is the same task deliverable maturity state 234 as task deliverable maturity state 233 and the definition of task deliverable maturity state 234 indicates that the deliverable should be 25% complete, then the deliverable percent complete is set to 25%.If the deliverable business object lifecycle state 270 is S2 262 and is the same task deliverable maturity state 235 as task deliverable maturity state 233 and the definition of task deliverable maturity state 235 indicates that the deliverable should be 50% complete, then the deliverable percent complete is set to 50%.If the deliverable business object lifecycle state 270 is S3 263 and is the same task deliverable maturity state 236 as task deliverable maturity state 233 and the definition of task deliverable maturity state 236 indicates that the deliverable should be 75% complete, then the deliverable percent complete is set to 75%.If the deliverable business object lifecycle state 270 is S4 264 and is the same task deliverable maturity state 237 as task deliverable maturity state 233 and the definition of task deliverable maturity state 237 indicates that the deliverable should be 100% complete, then the deliverable percent complete is set to 100%. It should be noted that while there are four maturity states for the present embodiment, other embodiments may have fewer maturity states, with all but the 100% maturity state being optional.

A user, for example the project manager, may edit an individual deliverable weightage 135 for each deliverable 130, which is displayed in the task deliverable table. The cumulative deliverable weighted percentage value is calculated based on the deliverable maturity state 234-237 and the deliverable weightage 135 to produce a percentage completion value 240 for the task 120.

The task maturity states 234-237 may be associated with text descriptors including, for example, "Preliminary," "Ready," "In Work," "In Review," and "Complete," among others. A task percentage completion value is updated based on the task maturity state. For example, the task percentage completion value is typically 0% in Preliminary, and 100% in Complete state. If the average percentage completion value of each of the task deliverables 230 is 100% then the task 120 is automatically promoted to a completed state. If the average percentage completion value is less than 100%, the task 120 is automatically demoted to an "In Work" state if the task has been promoted to the In Review or Complete state. The auto promotion/demotion state for a task 120 is configurable and is defined in a page object.

When deliverables are added to/removed from a task the deliverable weightage is automatically distributed such that the sum of all weightages is 100. This way the impact of changes to the number of deliverables on a task is evenly distributed across all deliverables on the task. The task assignee or project leader may then manually change the weightages (as long as they add up to 100) to define the importance of deliverables on the task and this change in weightage of deliverables is then respected by the software until deliverables are either added to/removed from the task.

Each time a deliverable is added or removed from a task the weightage is evenly distributed among all deliverables. In scenarios where there is an odd number of deliverables, the deliverable weightage for any one deliverable is rounded off to the nearest whole number so that weightages for all deliverables are whole numbers. For example, for two deliverables the system automatically distributes the weightage as 50 for each deliverable while for three deliverables the weightage is distributed as 34, 33, 33).

When a deliverable is added to a project task for which the automation is either undefined or switched off, the calculated values in the task deliverables table are cleared and the update of the percentage completion on the task is done manually by the task assignee and is not driven by the lifecycle state maturity of the deliverables on the task. Whenever a deliverable for which automation is either undefined or switched off is added to a task, the user adding the deliverable is presented with a message stating that automation is either undefined or switched off for the deliverable being added, hence automation for updating the percentage completion on the task is not possible. For each deliverable object, the task deliverable table has a column that indicates if automation has been defined for the deliverable type, if automation is switched off or if automation is undefined. Furthermore, when a deliverable on a task for which automation is either undefined or switched off is removed from the task, if automation can be applied for the remainder of the deliverables on the task, and if yes, all the values in the task deliverables table are recalculated and the percentage completion on the project task are updated based off the lifecycle status of the deliverables.

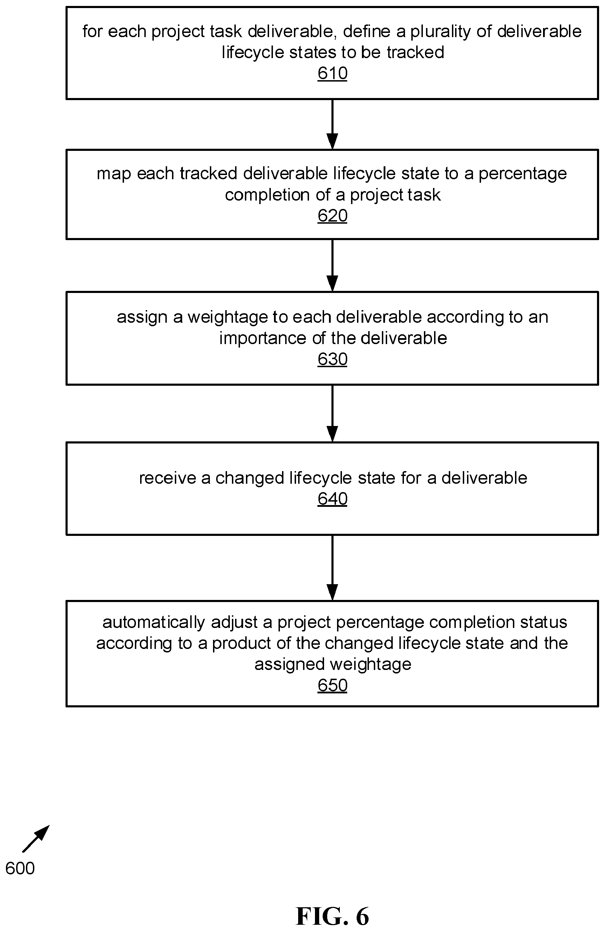

FIG. 6 is a flow chart 600 of a method for updating project status real-time based on deliverable status. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention. The method updates a project status in real-time based on deliverable status for a project having a plurality of tasks, each task with at least one deliverable. For each deliverable, a plurality of deliverable lifecycle states is defined, as shown by block 610. Each tracked deliverable lifecycle state is mapped to a percentage completion of a project task, as shown by block 620. A weightage is assigned to each deliverable according to an importance of the deliverable, as shown by block 630. A changed lifecycle state is received for a deliverable, as shown by block 640. A project percentage completion status is automatically adjusted according to a product of the changed lifecycle state and the assigned weightage, as shown by block 650.

FIG. 7 is a schematic block diagram 700 of an exemplary embodiment for a system for automatically updating a project status. The system 700 includes a task deliverable relationship manager 740 for relating product data 711 and process data 712 within a project database 710. A project deliverable manager 730 receives real-time project status, for example entered into one or more terminals 760 via a project server 750. The project deliverable manager 730 maintains a task maturity state machine 733 and a deliverable business object lifecycle state machine 770. The project deliverable manager 730 and the task deliverable relationship manager 740 communicate with the terminals 760 and the project database 710. While FIG. 7 shows a distributed embodiment, in alternative embodiments two or more of the project database 710, the task deliverable relationship manager 740 and the project deliverable manager 730 may be hosted in the same facility.

The project deliverable manager 730 may create and manage the global deliverables object 230 (FIG. 2), while the task deliverable relationship manager 740 calculates the cumulative deliverable weighted percentage value based on the deliverable maturity state 234-237 (FIG. 2) and the deliverable weightage 135 (FIG. 2) to produce a percentage completion value 240 (FIG. 2) for the task 120 (FIG. 2).

While previous project management systems rolled up percentage completion from a task level to a phase level and then onto a project itself, the embodiments here automate the way in which the percentage completion is applied on a task itself based on the deliverable status of the task. Under the embodiments, if a deliverable is considered 50% complete, it means that the deliverable is actually in a certain lifecycle state of maturity and its importance on a task is also factored in. This results in fact-based reporting instead of perception-based reporting. For example, here the project leader does not have to communicate with a team member generating the deliverable status and then subjectively update the project status, which may involve manually applying a percentage completion on the project task, and compiling this information for a report which may not be up to date because the status of the deliverable might have changed since the previous communication with the team member.

Previous project management tools are not able to automatically update the project status in this manner based on the changes in the lifecycle deliverables because previously, unlike under the present embodiments, deliverables (product data and documents) and project information were not managed in a single system working off a single database, so these items were not directly connected to one another. The embodiments leverage this direct connection between deliverable status and project information by introducing automation to update project task percentage completion based on deliverable lifecycle status. This eliminates non-value added activities such as following up and updating the project status for both the project leader and the task assignee. This allows a task assignee to focus on completing the deliverable and instead of spending time updating project task status.

Under the present embodiments, the project tasks themselves are not weighted. Instead, the deliverables on the task are weighted. Tasks in a project can be defined to occur either in a linear series based on task dependency i.e. task B cannot start until task A finishes or it may be defined to occur in parallel, depending on how the project leader models the project schedule.

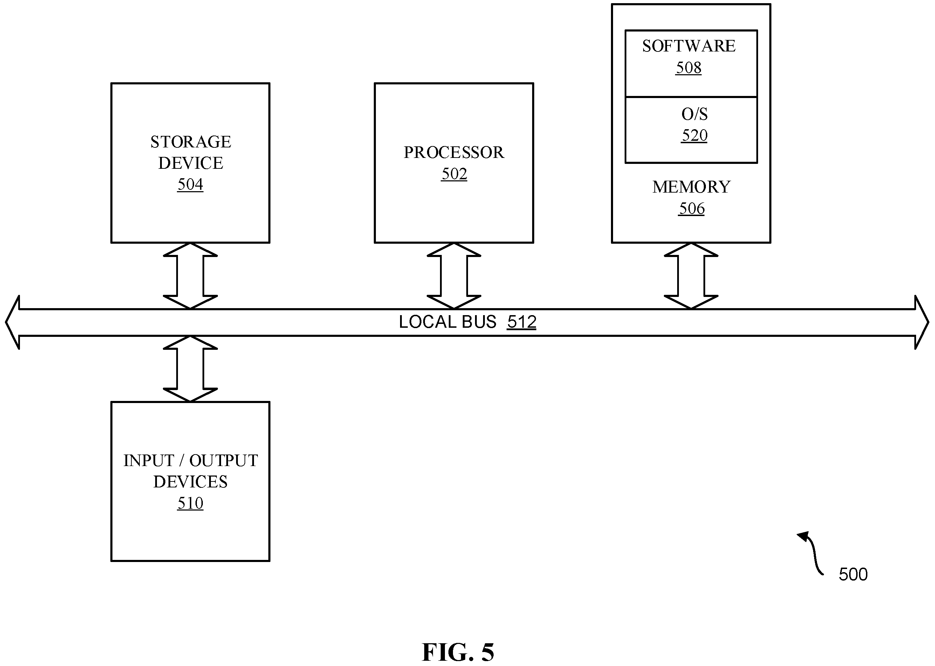

The embodiments for the present system for executing the functionality described in detail above may be implemented via a computer, an example of which is shown in the schematic diagram of FIG. 5. The system 500 contains a processor 502, a storage device 504, a memory 506 having software 508 stored therein that defines the abovementioned functionality, input and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a macroprocessor, or generally any device for executing software instructions.

The memory 506 can include any one or combination of volatile memory elements (e.g., random access memory (RAM, such as DRAM, SRAM, SDRAM, *etc.))* and nonvolatile memory elements *(e.g.,* ROM, hard drive, tape, CDROM, *etc.).* Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, *etc.* Furthermore, the I/O devices 510 may also include output devices, for example but not limited to, a printer, display, *etc.* Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 and the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

As noted above, it is advantageous that the platform manages product and project data in one database. The "Task Deliverable" out-of-the-box (OOTB) relationship is significant because it is the link between the project task and the product (such as a 3D design, a PDF document, or a requirement spec). This product data by means of the "Task Deliverable" relationship becomes a deliverable for a project task. Each deliverable is governed by a policy that has lifecycle stages. As the deliverable moves forward or backward in its lifecycle between stages, the percentage completion is updated on the task. The deliverable policy is defined globally so, for example, all Word files have a first policy and all CAD files have a second policy. However multiple policies can be associated to each type of deliverable, meaning a Word file can be governed by either the first policy or the second policy. When a Word file is saved on the platform the user chooses the appropriate policy. For example, the first policy may have only four lifecycle states and the second policy may have six lifecycle states and the user may choose either depending on the desired business need/rules. A Word file or for that matter any IP on the platform is always governed by only one policy at any point in time. So, the combination of the type of deliverable (Word or CAD etc.) and the governing policy (the first policy or the second policy) defines the automation.

In summary, it will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A system for updating and maintaining a status in real-time for a project comprising a plurality of tasks, each task further comprising at least one deliverable, the system comprising:
a memory device configured to store a project database comprising product data and process data;
a computer based task deliverable relationship manager configured to relate the product data and the process data, wherein the task deliverable relationship manager is in communication with the project database;
a computer based project deliverable manager further comprising a task maturity state machine and a deliverable business object lifecycle state machine, wherein the project deliverable manager is in communication with the task deliverable relationship manager and the project database, and the project deliverable manager is configured to:
receive real-time project status;
update the task maturity state machine, the deliverable business object lifecycle state machine, and the project database based upon the real-time project status,
wherein the system is configured to:
define a plurality of deliverable lifecycle states to be tracked for each project task with at least one deliverable,
map each tracked deliverable lifecycle state to a percentage completion of a project task,
assign a weightage to each deliverable according to an importance of the deliverable,
receive a changed lifecycle state for a deliverable, and
automatically adjust a project task percentage completion status according to a product of the changed lifecycle state and the assigned weightage.

2. The system of claim 1, further comprising a project server in communication with the memory device, the task deliverable relationship manager, and the project deliverable manager.

3. The system of claim 2, further comprising a terminal in communication with the project server configured to convey the real-time project status to the project deliverable manager.

4. The system of claim 1, wherein the task deliverable relationship manager is configured to update the product data and the process data.

5. A computer based method for updating a status in real-time for a project comprising a plurality of tasks, each task further comprising at least one deliverable, the project status updated in real-time based on a deliverable status of at least one task deliverable, the method comprising the steps of:
for each project task with at least one deliverable, defining a plurality of deliverable lifecycle states to be tracked;
mapping each tracked deliverable lifecycle state to a percentage completion of a project task;
assigning a weightage to each deliverable according to an importance of the deliverable; and
receiving a changed lifecycle state for a deliverable, and automatically adjusting a project task percentage completion status according to a product of the changed lifecycle state and the assigned weightage.

6. The method of claim 5, wherein each lifecycle state represents a completion percentage of the corresponding project task.

7. The method of claim 6, wherein the completion percentage consists of a group of 100% done, 75% done, 50% done, and 25% done.

8. The method of claim 5, wherein at least one project task deliverable comprises project data.

9. The method of claim 5, wherein at least one project task deliverable comprises a document.

10. The method of claim 5, further comprising the step of mapping a switch to a deliverable of the plurality of deliverables determining if the deliverable is included in or excluded from a project task percentage completion computation.

11. The method of claim 5, wherein a project task has exactly one deliverable, further comprising the steps of automatically assigning a deliverable weightage of 100%.

12. The method of claim 5, wherein the project and the plurality of tasks share a common database.
